# EUROPEAN PATENT SPECIFICATION

(11) **EP 4 423 474 B1**
(45) Date of publication and mention of the grant of the patent: **25.02.2026**
(21) Application number: 21805403.9
(22) Date of filing: 27.10.2021
(51) Int. Cl.: G01M 11/02

(54) **OPTICAL ARTICLE INSPECTION APPARATUS AND METHOD**
VORRICHTUNG UND VERFAHREN ZUR OPTISCHEN INSPEKTION VON GEGENSTÄNDEN
APPAREIL ET PROCÉDÉ D'INSPECTION D'ARTICLE OPTIQUE

(43) Date of publication of application: 04.09.2024
(73) Proprietor: Transitions Optical, Ltd., Tuam, Co. Galway (IE)
(72) Inventor: MURPHY, Neil, Castlebar, Co. Mayo F23RX73 (IE); BLACKBURN, Forrest, Pickerington, Ohio 43147 (US); HAZLE, Joshua, Tampa, Florida 33635 (US); CHOROS, Adam, Pittsburgh, Pennsylvania 15235 (US); BEAMER, Willard, Palmetto, Florida 34221 (US); ASKEW-CRAWFORD, Laura, Parrish, Florida 34219 (US)
(74) Representative: f & e patent
(86) International application number: PCT/EP2021/079816
(87) International publication number: WO 2023/072383

(56) References cited:
- EP-A2- 0 604 180
- EP-A2- 0 686 585
- WO-A1-2019/185133
- WO-A2-99/26052
- US-A- 5 649 410

## Description

### BACKGROUND OF THE DISCLOSURE

### Field of the Disclosure

The present disclosure relates generally to an inspection apparatus for inspecting an optical article and a method for inspecting an optical article using the inspection apparatus, and, in particular, to an automated inspection apparatus for inspecting one or more characteristics of a plurality of optical articles and a method for inspecting a plurality of optical articles using the inspection apparatus.

### Description of Related Art

During manufacture of optical articles, such as contact lenses or eyeglass lenses, it is desirable to perform one or more inspection processes. Such inspection processes may be configured for inspecting one or more characteristics of the optical article in order to maintain product consistency and quality. For example, the inspection process may be configured for determining the presence of defects.

Manual inspection of optical articles is expensive, time consuming, and is likely to produce inconsistent results. Automated inspection devices have been developed to automate the inspection processes and eliminate the need for manual inspection. With many automated inspection devices, a user must manually load and unload lenses one at a time into the inspection device. During the automated inspection process, each optical article is immersed in a liquid, such as a saline solution, and is inspected for defects. The automated inspection process may take up to 20 minutes, during which no additional lenses can be loaded into or unloaded from the inspection device. While conventional automated inspection devices have improved the quality of the inspection process, such inspection devices are not configured for a batch inspection process where a plurality of optical articles are automatically loaded into the automated inspection device and unloaded therefrom after completion of the one or more inspection processes on each of the plurality of optical articles.

Accordingly, there is a need in the art to provide an automated loading and unloading of optical articles into and out of the inspection device.

The international application WO 99/260 52 A1 discloses an automatic system for inspecting contact lenses according to the prior art. In this document, the contact lenses are suspended in a saline solution within a lens holder.

### SUMMARY OF THE DISCLOSURE

In accordance with some examples or aspects of the present disclosure, provided is an inspection apparatus configured for inspecting optical articles. The inspection apparatus may have an inspection chamber including an inspection station, and a holding chamber having an indexable holding platform with a plurality of holding slots each configured for receiving a holder adapted for securing the optical article. The indexable holding platform may be configured to index a selected holder into an inspection position. The inspection apparatus further may include a gripper mechanism configured for transferring the selected holder from the inspection position to the inspection chamber.

In accordance with some examples or aspects of the present disclosure, each holder may include a holder body having a lens receiving portion, a clamping lid connected to the holder body and movable between a closed position configured for clamping the optical article and an open position, and a first connection member configured for securing the holder body to the holding slot of the indexable holding platform. The first connection member may be one of a first magnet and a first magnetically attractable material that is configured for magnetically interacting with a corresponding one of a second magnetically attractable material and a second magnet on the holding slot of the indexable holding platform. Each holder may include a second connection member configured for connecting the holder body to the gripper mechanism. Each holder further may include an identification tag.

In accordance with some examples or aspects of the present disclosure, the indexable holding platform may be a rotary magazine that includes a plurality of distinct circumferential positions each having a holding slot. Each holding slot of the holding mechanism may include a baffle positioned relative to the holder such that the baffle covers the optical article.

In accordance with some examples or aspects of the present disclosure, the gripper mechanism may be linearly movable between a first position corresponding to a location of the inspection position of the indexable holding platform and a second position corresponding to a location of the inspection station. The inspection station may include at least one viewing port and the inspection chamber may have a scalloped sidewall.

In accordance with some examples or aspects of the present disclosure, the inspection apparatus further may include an auxiliary chamber having: a pump configured for circulating fluid within the holding chamber and within a temperature control circuit of the inspection apparatus, a filter configured for filtering the fluid, and a temperature controller configured for controlling a temperature of the fluid.

In accordance with some examples or aspects of the present disclosure, the holding chamber may be in fluid communication with the inspection chamber. The holding chamber may be optically isolated from the inspection chamber.

In accordance with some examples or aspects of the present disclosure, provided is a method of inspecting an optical article using an inspection apparatus. The method may include rotating the indexable holding platform having a plurality of holding slots each configured for receiving a holder adapter for securing the optical article until a selected holder is indexed to an inspection position. The method further may include moving a gripping mechanism to the inspection position to grip the selected holder, and moving the gripping mechanism from the inspection position to an inspection station configured for inspecting the optical article.

In accordance with some examples or aspects of the present disclosure, the method further may include returning the selected holder to the indexable holding platform after inspecting the optical article and rotating the indexable holding platform until a next selected holder is indexed to the inspection position. The method further may include maintaining a temperature of a fluid immersing the holders at a predetermined temperature.

An inspection apparatus for inspecting optical articles and a method of inspecting optical articles using the inspection apparatus may be characterized by one or more of the following aspects.

In a first aspect, an inspection apparatus configured for inspecting optical articles may have an inspection chamber including an inspection station, a holding chamber having an indexable holding platform with a plurality of holding slots each configured for receiving a holder adapted for securing the optical article, the indexable holding platform configured to index a selected holder into an inspection position, and a gripper mechanism configured for transferring the selected holder from the inspection position to the inspection chamber.

In a second aspect, in the inspection apparatus in accordance with the first aspect, each holder may include a holder body having a lens receiving portion, a clamping lid connected to the holder body and movable between a closed position configured for clamping the optical article and an open position, and a first connection member configured for securing the holder body to the holding slot of the indexable holding platform.

In a third aspect, in the inspection apparatus in accordance with the first aspect or the second aspect, the first connection member may be one of a first magnet and a first magnetically attractable material that is configured for magnetically interacting with a corresponding one of a second magnetically attractable material and a second magnet on the holding slot of the indexable holding platform.

In a fourth aspect, in the inspection apparatus in accordance with the third aspect, each holder may include a second connection member configured for connecting the holder body to the gripper mechanism.

In a fifth aspect, in the inspection apparatus in accordance with any of the first aspect to the fourth aspect, each holder further may include an identification tag. The identification tag may be unique to each holder.

In a sixth aspect, in the inspection apparatus in accordance with any of the first aspect to the fifth aspect, the indexable holding platform may be a rotary magazine that includes a plurality of distinct circumferential positions each having a holding slot.

In a seventh aspect, in the inspection apparatus in accordance with any of the first aspect to the sixth aspect, each holding slot of the holding mechanism may include a baffle positioned relative to the holder such that the baffle covers the optical article.

In an eighth aspect, in the inspection apparatus in accordance with any of the first aspect to the seventh aspect, the gripper mechanism may be linearly movable between a first position corresponding to a location of the inspection position of the indexable holding platform and a second position corresponding to a location of the inspection station.

In a ninth aspect, in the inspection apparatus in accordance with any of the first aspect to the eighth aspect, the inspection station may include at least one viewing port and the inspection chamber may have a scalloped sidewall.

In a tenth aspect, in the inspection apparatus in accordance with any of the first aspect to the ninth aspect, the inspection apparatus further may include an auxiliary chamber having: a pump configured for circulating fluid within the holding chamber and within a temperature control circuit of the inspection apparatus; a filter configured for filtering the fluid; and a temperature controller configured for controlling a temperature of the fluid.

In an eleventh aspect, in the inspection apparatus in accordance with any of the first aspect to the tenth aspect, the holding chamber may be in fluid communication with the inspection chamber.

In a twelfth aspect, in the inspection apparatus in accordance with any of the first aspect to the eleventh aspect, the holding chamber may be optically isolated from the inspection chamber.

In a thirteenth aspect, a method of inspecting an optical article using an inspection apparatus may include rotating the indexable holding platform having a plurality of holding slots each configured for receiving a holder adapter for securing the optical article until a selected holder is indexed to an inspection position; moving a gripping mechanism to the inspection position to grip the selected holder; and moving the gripping mechanism from the inspection position to an inspection station configured for inspecting the optical article.

In a fourteenth aspect, in the inspection apparatus in accordance with the first aspect, the method may further include returning the selected holder to the indexable holding platform after inspecting the optical article and rotating the indexable holding platform until a next selected holder is indexed to the inspection position.

In a fifteenth aspect, in the method in accordance with the thirteenth or fourteenth aspect, the method further may include maintaining a temperature of a fluid immersing the holders at a predetermined temperature.

The features that characterize the present disclosure are pointed out with particularity in the claims, which are annexed to and form a part of this disclosure. These and other features of the disclosure, its operating advantages, and the specific objects obtained by its use will be more fully understood from the following detailed description in which non-limiting examples of the disclosure are illustrated and described.

### BRIEF DESCRIPTION OF THE DRAWINGS

**FIG.** 1 is a top perspective view of an inspection apparatus for inspecting a plurality of optical articles in accordance with some examples or aspects of the present disclosure;
**FIG.** 2A is a bottom plan view of a first portion of a holding portion configured for use with the inspection apparatus of FIG. 1;
**FIG. 2B** is a top view of the holding portion shown in **FIG.** 2A;
**FIG. 3** is a top perspective view of a holding platform configured for use with the inspection apparatus of **FIG. 1****;**
**FIG. 4A** is a detailed top perspective view of a front portion of a holding slot of the inspection platform shown in **FIG. 3** and a holder positioned in the holding slot;
**FIG. 4B** is a detailed top perspective view of a rear portion of the holding slot and holder shown in **FIG. 4A****;**
**FIG. 5A** is a top perspective view of a holder for holding an optical article in accordance with some examples or aspects of the present disclosure, the holder configured for use with the holding platform shown in **FIG. 3****;**
**FIG. 5B** is an exploded top perspective view of the holder shown in **FIG. 5A****;**
**FIG. 6** is a top perspective view of a gripper mechanism in accordance with some examples or aspects of the present disclosure, the gripper mechanism configured for use with the inspection apparatus shown in **FIG. 1****;**
**FIG. 7A** is a detailed top perspective view of an inspection portion configured for use with the inspection apparatus of **FIG. 1****;**
**FIG. 7B** is a top view of the inspection chamber shown in **FIG. 7A****;**
**FIG. 7C** is a detailed top perspective view of the inspection portion of **FIG. 7A** with a cover removed from an upper portion of the inspection chamber;
**FIG. 8** is a top view of an auxiliary portion configured for use with the inspection apparatus of **FIG. 1****;**
**FIG. 9** is a flow chart of a method for inspecting optical articles in accordance with some examples or aspects of the present disclosure.

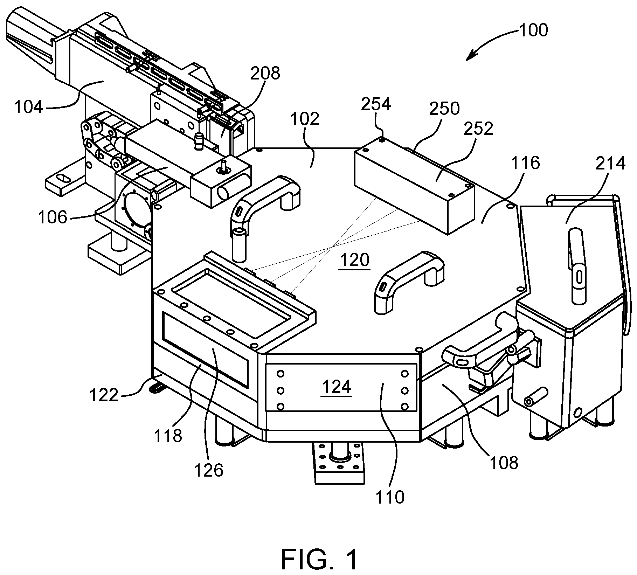

In **FIGS. 1-9****,** like characters refer to the same components and elements, as the case may be, unless otherwise stated.

### DETAILED DESCRIPTION OF THE DISCLOSURE

As used herein, the singular form of "a", "an", and "the" include plural referents unless the context clearly dictates otherwise.

Spatial or directional terms, such as "left", "right", "inner", "outer", "above", "below", and the like, relate to the invention as shown in the drawing figures and are not to be considered as limiting as the invention can assume various alternative orientations.

All numbers used in the specification and claims are to be understood as being modified in all instances by the term "about". By "about" is meant plus or minus twenty-five percent of the stated value, such as plus or minus ten percent of the stated value. However, this should not be considered as limiting to any analysis of the values under the doctrine of equivalents.

Unless otherwise indicated, all ranges or ratios disclosed herein are to be understood to encompass the beginning and ending values and any and all subranges or subratios subsumed therein. For example, a stated range or ratio of "1 to 10" should be considered to include any and all subranges or subratios between (and inclusive of) the minimum value of 1 and the maximum value of 10; that is, all subranges or subratios beginning with a minimum value of 1 or more and ending with a maximum value of 10 or less. The ranges and/or ratios disclosed herein represent the average values over the specified range and/or ratio.

The terms "first", "second", and the like are not intended to refer to any particular order or chronology, but refer to different conditions, properties, or elements.

All documents referred to herein are "incorporated by reference" in their entirety.

The term "at least" is synonymous with "greater than or equal to".

As used herein, "at least one of" is synonymous with "one or more of". For example, the phrase "at least one of A, B, or C" means any one of A, B, or C, or any combination of any two or more of A, B, or C. For example, "at least one of A, B, and C" includes A alone; or B alone; or C alone; or A and B; or A and C; or B and C; or all of A, B, and C.

The term "includes" is synonymous with "comprises".

As used herein, the terms "parallel" or "substantially parallel" mean a relative angle as between two objects (if extended to theoretical intersection), such as elongated objects and including reference lines, that is from 0° to 5°, or from 0° to 3°, or from 0° to 2°, or from 0° to 1°, or from 0° to 0.5°, or from 0° to 0.25°, or from 0° to 0.1°, inclusive of the recited values.

As used herein, the terms "perpendicular" or "substantially perpendicular" mean a relative angle as between two objects at their real or theoretical intersection is from 85° to 90°, or from 87° to 90°, or from 88° to 90°, or from 89° to 90°, or from 89.5° to 90°, or from 89.75° to 90°, or from 89.9° to 90°, inclusive of the recited values.

As used herein, the term "optical" means pertaining to or associated with light and/or vision. For example, according to various non-limiting aspects disclosed herein, the optical element, article or device can be chosen from ophthalmic elements, articles, and devices, display elements, articles, and devices, windows, and mirrors.

As used herein, the term "ophthalmic" means pertaining to or associated with the eye and vision. Non-limiting examples of ophthalmic articles or elements include corrective and non-corrective lenses, including single vision or multi-vision lenses, which may be either segmented or non-segmented multi-vision lenses (such as, but not limited to, bifocal lenses, trifocal lenses and progressive lenses), as well as other elements used to correct, protect, or enhance (cosmetically or otherwise) vision, including without limitation, optical articles, contact lenses, intra-ocular lenses, magnifying lenses, and protective lenses or visors.

As used herein, the terms "lens" and "lenses" mean and encompass at least individual lenses, lens pairs, partially formed (or semi-finished) lenses, fully formed (or finished) lenses, and lens blanks.

As used herein, the terms "visible light" or "visible radiation" means electromagnetic radiation having a wavelength in the range of 380 nm to 780 nm.

The discussion of various examples or aspects may describe certain features as being "particularly" or "preferably" within certain limitations (e.g., "preferably", "more preferably", or "even more preferably", within certain limitations). It is to be understood that the disclosure is not limited to these particular or preferred limitations but encompasses the entire scope of the various examples and aspects described herein.

As used herein, the terms "communication" and "communicate" may refer to the reception, receipt, transmission, transfer, provision, and/or the like, of information (e.g., data, signals, messages, instructions, commands, and/or the like).

As used herein, a "graphical user interface" or "GUI" refers to a generated display with which a user may interact, either directly or indirectly (e.g., through a button, keyboard, mouse, touchscreen etc.).

As used herein, the term "inspection", when used in reference to an optical article, refers to at least one of a quantitative, qualitative, or performance measurement of at least one characteristic of the optical article.

The disclosure comprises, consists of, or consists essentially of, the following examples or aspects, in any combination. Various examples or aspects of the disclosure are illustrated in separate drawing figures. However, it is to be understood that this is simply for ease of illustration and discussion. In the practice of the disclosure, one or more examples or aspects shown in one drawing figure can be combined with one or more examples or aspects shown in one or more of the other drawing figures.

With reference to **FIG. 1****,** an inspection apparatus **100** is shown in accordance with some examples or aspects of the present disclosure. The inspection apparatus **100** may be configured for inspecting optical articles, such as an automated inspection of a plurality of optical articles. The inspection apparatus **100** generally includes a holding station **102** configured for holding a plurality of optical articles, an inspection station **104** configured for inspecting the optical articles, and a transfer station **106** configured for transferring individual optical articles between the holding station **102** to the inspection station **104** during an automated inspection process.

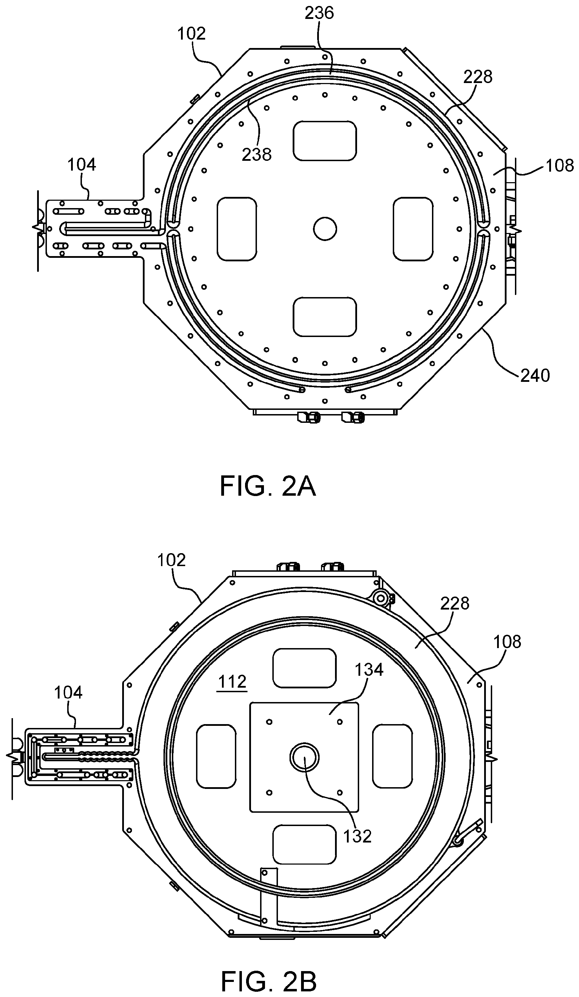

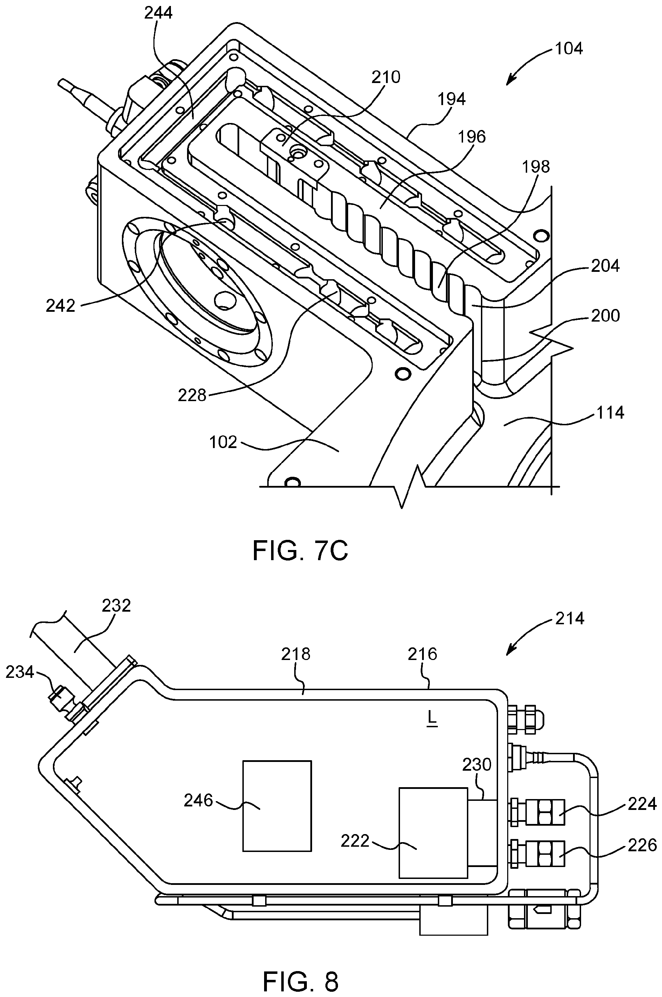

With continued reference to **FIG. 1****,** the holding station **102** includes a housing **108** having a sidewall **110** connected to a bottom wall **112** (shown in **FIG. 2B****)** to define a holding chamber **114** (shown in **FIG. 7C****).** A lid **116** is configured for removably engaging an upper end of the sidewall **110** opposite the bottom wall **112** to fully enclose the holding chamber **114.** In some examples or aspects, one or more doors **118** may be provided on the sidewall **110** to provide access to the holding chamber **114.** In some examples or aspects, the one or more doors **118** may be provided on the lid **116,** or on the sidewall **110** and the lid **116.** The housing **102** may be of any suitable rigid material, such as metal, plastic, or a combination thereof.

With continued reference to **FIG. 1****,** the housing **108** includes a plurality of sides, including a top side **120** defined by the lid **116,** a bottom side **122** defined by the bottom wall **112,** and one or more vertical walls **124** defining the sidewall **110.** In some examples or aspects, the housing **108** is monolithically formed as a single, integral part. In other examples or aspects, the housing **108** is formed from a plurality of discrete parts that are removably or non-removably combined together. The holding chamber **114** defined by the plurality of sides of the housing **108** is desirably fluid tight to prevent leakage of fluid therefrom. In some examples or aspects, the holding chamber **114** is configured for being at least partially filled with liquid, such as water or a saline solution. While the housing **108** shown in **FIG. 1** has a substantially octagonal shape, the housing **102** may have any other shape.

In some examples or aspects, at least a portion of the housing **108** may be transparent to allow viewing of the holding chamber **114** from the outside of the housing **108** through at least a portion of the sidewall **110** and/or the lid **116.** For example, at least a portion of the sidewall **110** and/or the lid **116** may have a viewing window **126.** In some examples or aspects, the viewing window **126** may be provided on the door **118** that is provided on at least one of the sidewall **110** and the lid **116.** The viewing window **126** may be covered by a transparent cover made of plastic or glass. As used herein, "transparent" means permitting visible light to pass through without diffusing or scattering the light. In other examples or aspects, the viewing window **126** may be opaque to prevent transmission of visible light from outside of the housing **108** into the holding chamber **114.**

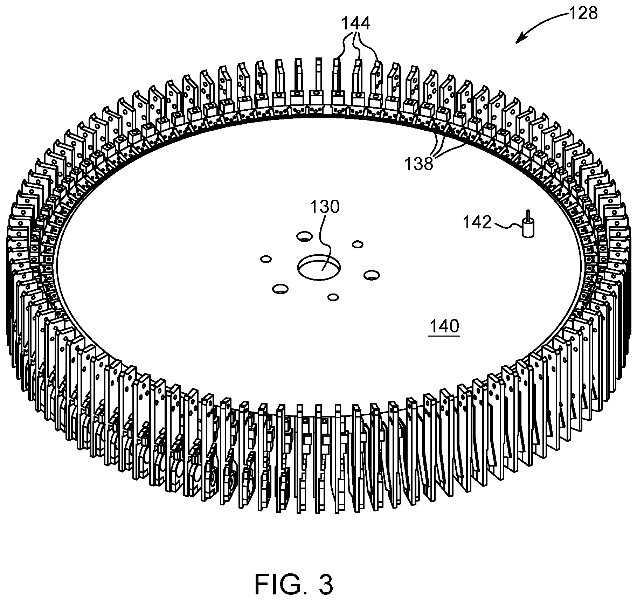

With reference to **FIG. 3****,** a holding platform **128** is shown in accordance with some embodiments or aspects. The holding platform **128** may be configured for use with the holding station **102** of the inspection apparatus **100** (shown in **FIG. 1****).** For example, the holding platform **128** may be configured for being received within the holding chamber **114** of the holding station **102** and for holding a plurality of optical articles, as described herein. In some examples or aspects, the holding platform **128** may have a substantially circular shape.

With continued reference to **FIG. 3****,** the holding platform **128** may be rotatably supported within the holding chamber **114** of the inspection station **102.** In some examples or aspects, the holding platform **128** has a central opening **130** that is configured for receiving a rotating shaft **132** of a drive mechanism **134** (shown in **FIG. 2B****).** The rotating shaft **132** may be configured for engaging an inner surface of the central opening **130,** such as via splines, a key, or other engagement mechanism, such that rotation of the rotating shaft **132** about its rotational axis **136** causes a corresponding rotation of the holding platform **128.** Operation of the drive mechanism **134** may be controlled such that a rotational position of the holding platform **128** can be accurately determined, as discussed herein.

In some examples or aspects, the holding platform **128** may be an indexable holding platform. For example, the holding platform **128** may be a rotary magazine that can be indexed into any one of a plurality of distinct circumferential positions. One or more position determining features **142** may be provided on the holding platform **128** to facilitate determining a rotational position of the holding platform **128.** The one or more position determining features **142** may be configured for interacting with a sensor (not shown) configured for determining the rotational position of the holding platform **128.** In further examples or aspects, the one or more position determining features **142** may be configured for confirmation of position, validation of position, verification of position accuracy, and start-stop sequencing of the holding platform **128.**

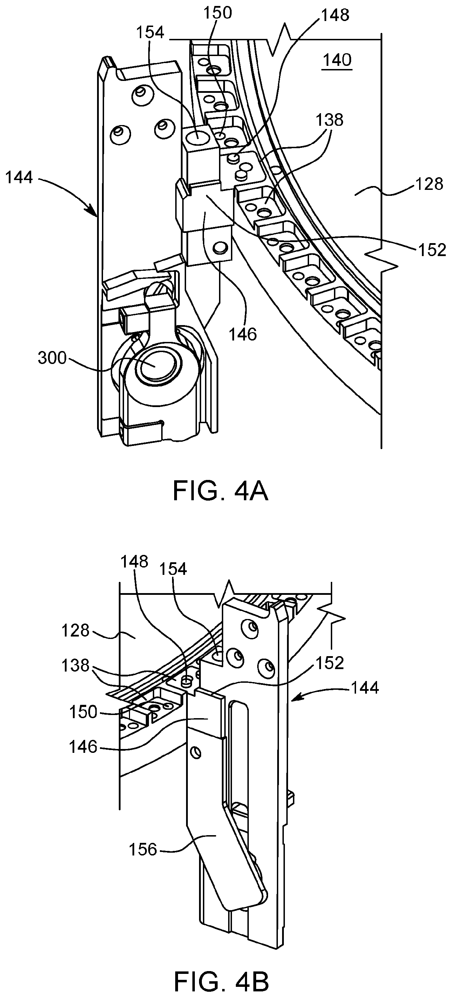

With reference to **FIGS. 3** and **4A****,** the holding platform **128** may have a plurality of holding slots **138** extending around an outer perimeter thereof. In some examples or aspects, each holding slot **138** may be recessed into an upper surface **140** of the holding platform **128.** In other examples or aspects, each holding slot **138** may protrude relative to the upper surface **140** of the holding platform **128.** The plurality of holding slots **138** are desirably identical in shape and may have equal or unequal angular separation therebetween about a perimeter of the holding platform **128.** In use, the holding platform **128** is configured to be indexed into a plurality of positions corresponding to the plurality of holding slots **138.** For example, on a holding platform **128** having 100 holding slots **138,** the holding platform **128** is configured to be indexed in angular intervals of 3.6⁰.

With reference to **FIGS. 4A-4B****,** each holding slot **138** may have a cover plate **146** that is removably connectable to the respective holding slot **138.** In some examples or aspects, one of the holding slot **138** and the cover plate **146** may have at least one pin **148** that is configured for being inserted into a corresponding at least one hole **150** on the other of the holding slot **138** and the cover plate **146.** In other examples or aspects, the cover plate **146** may be non-removably connected or formed with the respective holding slot **138.**

With continued reference to **FIGS. 4A-4B****,** each holding slot **138** is configured for receiving a holder **144** adapted for securing an optical article **300.** Each holder **144** may be removably connectable to the respective holding slots **138.** For example, the holder **144** may be removably connectable to the respective cover plate **146** of each holding slot **138.** In this manner, the optical article **300** (shown in **FIG. 4A****)** may be installed onto the holder **144** prior to the start of the automated inspection process, or removed from the holder **144** at the end of the automated inspection process. Additionally, each holder **144** may be removed from the respective holding slot **138** and/or the cover plate **146** during the optical article inspection process, as described herein.

With continued reference to **FIGS. 4A-4B****,** each cover plate **146** has a connection interface **152** configured for removably receiving the holder **144.** In some examples or aspects, the connection interface **152** may be a metal surface made from a magnetic, magnetizable, or magnetically attractive material. In this manner, the holder can be removably connected to the connection interface **152** via a magnetic interaction with the cover plate **146.** For example, holder **144** may have a first connection member **154** made from a magnetic, magnetizable, or magnetically attractive material that is configured for magnetically interacting with a corresponding a magnetic, magnetizable, or magnetically attractive material on the connection interface **152** of the cover plate **146.**

With reference to **FIG. 4B****,** each cover plate **146** has a baffle **156.** In some examples or aspects, the baffle **156** depends downwardly from a body **158** of the cover plate **146** and is configured to block at least a portion of the optical article **300** when the holder **144** is connected to the cover plate **146.** In some examples or aspects, the baffle **156** is configured to prevent water flow pressure from distorting the surface of the optical article **300** (shown in **FIG. 4A****).** For example, the baffle **156** may be positioned relative to the optical article **300** such that water flow pressure due to movement of the holding platform **128** primarily impacts the baffle **156** instead of the surface of the optical article **300.** Additionally, the baffle **156** may be configured for shielding stray light that may enter the holding chamber **114** from reaching the optical article **300.** In this manner, activation of light-activated coatings on the optical article **300** is prevented.

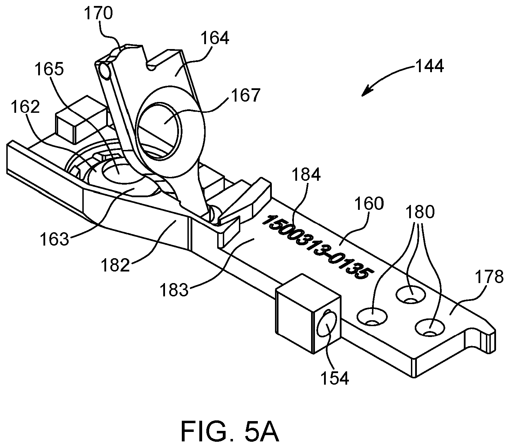

With reference to **FIGS. 5A-5B****,** the holder **144** is shown separately from the holding platform **144.** The holder **144** has a holder body **160** with an optical article (lens) receiving portion **162,** and a clamping lid **164** connected to the holder body **160.** The optical article receiving portion **162** may have a support surface **163** that is at least partially shaped to correspond to a shape of the optical article **300.** For example, the support surface **163** may have a convex shape. In some examples or aspects, the support surface **163** may be configured to self-center the optical article **300** thereon such that the optical article **300** is positioned in a desired orientation. The support surface **163** has at least one groove **169** configured to facilitate even fluid flow over the optical article **300** during the measurement process in order to remove any air bubbles which may cause inaccuracies in the inspection process. An inspection opening **165** is provided on the support surface **163** and is configured to permit unobstructed view of at least a central portion of the optical article **300.** The clamping lid **164** has a corresponding inspection opening **167** that, when the clamping lid **164** is closed, aligns with the inspection opening **165** on the holder body **160.** An underside of the clamping lid **164** has a contoured surface that is shaped to correspond to the support surface **163** such that, when the clamping lid **164** is closed, the optical article **300** is held between the support surface **164** and the clamping lid **164** without distortion to the shape of the optical article **300** which may result in inaccuracies in the inspection process.

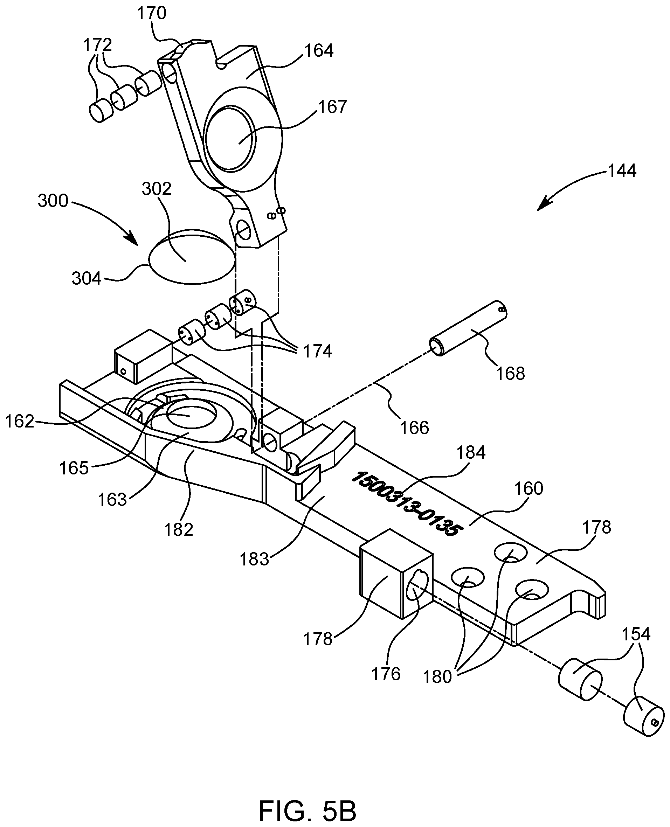

With reference to **FIGS. 5A-5B****,** the clamping lid **164** is movably connected to the holder body **160** and is configured to be movable between a closed position, in which the optical article **300** is retained in the optical article receiving portion **162** between the holder body **160** and the clamping lid **164,** and an open position, in which the optical article **300** can be removed from the optical article receiving portion **162.** In some examples or aspects, the clamping lid **164** is pivotally connected to the holder body **160** and is movable about a pivot axis **166** via a pivot pin **168** (shown in **FIG. 5B****).** The clamping lid **164** is configured to exert an even clamping pressure on the optical article **300** when the clamping lid **164** is in the closed position. The clamping lid **164** may be manually moved between the open position and the closed position via a grip **170** on a free end of the clamping lid **164.**

In some examples or aspects, a locking mechanism may be provided to lock the clamping lid **164** in the closed position. For example, with reference to **FIG. 5B****,** at least one first magnet **172** may be provided on the clamping lid **164** proximate to the grip **170** and at least one second magnet **174** may be provided on the holder body **160.** The at least one first and second magnets **172, 174** are positioned such that they generate a magnetically attractive force therebetween to retain the clamping lid **164** in the closed position when the at least one first magnet **172** and the at least one second magnet **174** are in magnetic proximity to each other.

With continued reference to **FIGS. 5A-5B****,** the holder body **160** has the first connection member **154** configured for removably connecting the holder **144** to the holding slot **138,** such as the connection interface **152** of the cover plate **146** connected to the holding slot **138.** The first connection member **154** may be made from a magnetic, magnetizable, or magnetically attractive material that is configured for magnetically interacting with a corresponding a magnetic, magnetizable, or magnetically attractive material on the connection interface **152** of the cover plate **146.** In some embodiments or aspects, the first connection member **154** may be received in a holding cavity **176** of a receiving member **178** connected to the holder body **160** (shown in **FIG. 5B****).**

With continued reference to **FIGS. 5A-5B****,** the holder body **160** has a second connection member **178** configured for removably connecting the holder **144** to gripper mechanism during transport of the holder **144** from the holding platform **128** to the inspection station **104** (shown in **FIG. 1****).** In some examples or aspects, the second connection member **178** comprises one or more through holes **180** extending through the holder body **160.** For example, the second connection member **178** may have 3 through holes extending through the holder body **160.** As described herein, the gripper mechanism has a corresponding number of pins that are configured to extend through the through holes **180** of the second connection member **178** to securely grip the holder **144** during transport of the holder **144** from the holding platform **128** to the inspection station **104** (shown in **FIG. 1****).**

With continued reference to **FIGS. 5A-5B****,** the holder body **160** has a shield **182** protruding outwardly from an upper surface **183** of the holder body **160.** The shield **182** extends along at least a portion of longitudinal length of the holder body **160** and at least partially surrounds the clamping lid **164.** The shield **182** is configured for shielding stray light that may enter the holding chamber **114** from reaching the optical article **300.** In this manner, activation of light-activated coatings on the optical article **300** is prevented.

With continued reference to **FIGS. 5A-5B****,** the holder body **160** has an identification tag **184.** In some examples or aspects, the identification tag **184** includes identifying information about at least one characteristic of the holder **144** and/or the optical article **300.** For example, the identification tag **184** may contain information about the position of the holder **144** on the holding platform **128** and/or identifying information about one or more characteristics of the optical article **300.** In some examples or aspects, the identification tag **184** may be an RFID tag. The identification tag **184** may be unique to each holder **144.**

With reference to **FIG. 5B****,** the optical article **300** has a forward or top surface **302,** a rearward or bottom surface (not shown), and a side surface **306** extending between the top surface **302** and the bottom surface. When the optical article **300** is a contact lens, the bottom surface is opposed to the eye of an individual wearing the optical article **300** and the top surface **302** faces incident light (not shown) at least a portion of which passes through the optical article **300** and into the individual's eye.

The optical article **300** can be selected from ophthalmic articles or elements, display articles or elements, windows, mirrors, active liquid crystal cell articles or elements, and passive liquid crystal cell articles or elements. Examples of ophthalmic articles or elements include, but are not limited to, corrective and non-corrective lenses, including single vision or multi-vision lenses, which can be either segmented or non-segmented multi-vision lenses (such as, but not limited to, bifocal lenses, trifocal lenses, and progressive lenses), contact lenses, as well as other elements used to correct, protect, or enhance (cosmetically or otherwise) vision, including without limitation, optical articles, intra-ocular lenses, magnifying lenses, and protective lenses or visors.

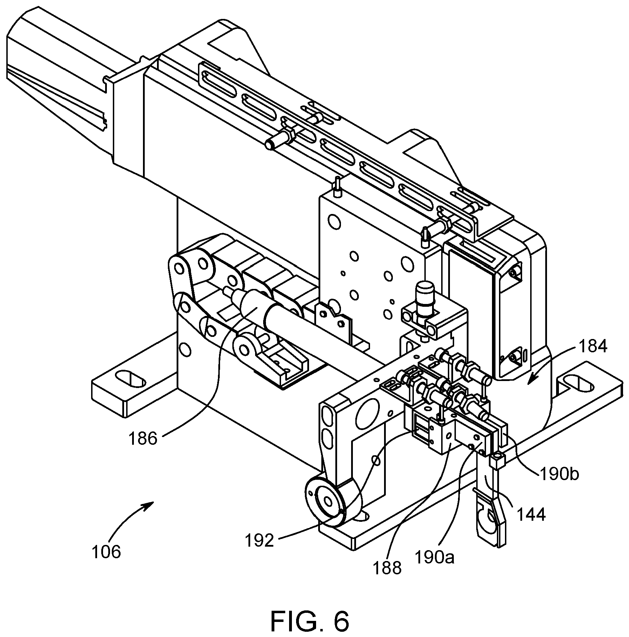

With reference to **FIG. 6****,** the transfer station **106** is shown separately from the remaining components of the inspection apparatus **100** shown in **FIG. 1****.** The transfer station **106** is configured for transferring a selected holder **144** from the holding station **102** to the inspection station **104** (shown in **FIG. 1****).** In some examples or aspects, the transfer station **106** has a gripper mechanism **184** that is configured for gripping the selected holder **144** when the holding platform **128** is rotated such that the holder **144** is aligned in an inspection position. After gripping the selected holder **144,** the gripper mechanism **184** may be configured for moving the selected holder **144** from the holding platform **128** to the inspection station **104** (shown in **FIG. 1****).** After the inspection process is completed, the gripper mechanism **184** may be configured for moving the selected holder **144** from the inspection station **104** back to the same holding slot **138** on the holding platform **128** from which the holder **144** was removed.

With continued reference to **FIG. 6****, the** gripper mechanism **184** may have an actuator **186** for moving the holder **144** between the holding platform **128** and the inspection station **104.** The actuator **186** may be a linear actuator, a rotary actuator, or a combination thereof. In some examples or aspects, the actuator **186** may be configured for linearly moving between the holding platform **128** and the inspection station **104.** In other examples or aspects, the actuator **186** may be configured for rotatably moving between the holding platform **128** and the inspection station **104.** In further examples or aspects, the actuator **186** may be configured for linearly and rotatably moving between the holding platform **128** and the inspection station **104.**

With continued reference to **FIG. 6****,** the gripper mechanism **184** may have a gripper **188** configured for gripping the holder **144.** In some examples or aspects, the gripper **188** may be configured to grip the holder **144** when the gripping mechanism **184** is positioned proximate to the selected holder **144.** After gripping the holder **144,** the gripper **188** may be configured to hold the holder **144** during transfer between the holding platform **128** and the inspection station **104** and during the inspection process at the inspection station **104.** The gripper **188** may be configured to release the holder **144** after the gripper mechanism **184** returns the holder **144** to the holding slot **138.**

In some examples or aspects, the gripper **188** may have a pair of jaws **190a, 190b** operable between an engaged position and a disengaged position. In the engaged position, the jaws **190a, 190b** are urged toward each other to retain at least a portion of the holder **144** therebetween. In the disengaged position, the jaws **190a, 190b** are urged away from each other such that the holder **144** is released from being held between the jaws **190a, 190b.** At least one of the jaws **190a, 190b** may have a plurality of pins **191** that are configured for extending through the through holes **180** on the second connection member **178** of the holder **144** (shown in **FIG. 5A****).** The jaws **190a, 190b** may be movable between the engaged position and the disengaged position via a gripper actuator **192.** In some examples or aspects, the gripper actuator **192** may be an electric motor, a pneumatic actuator, or a solenoid.

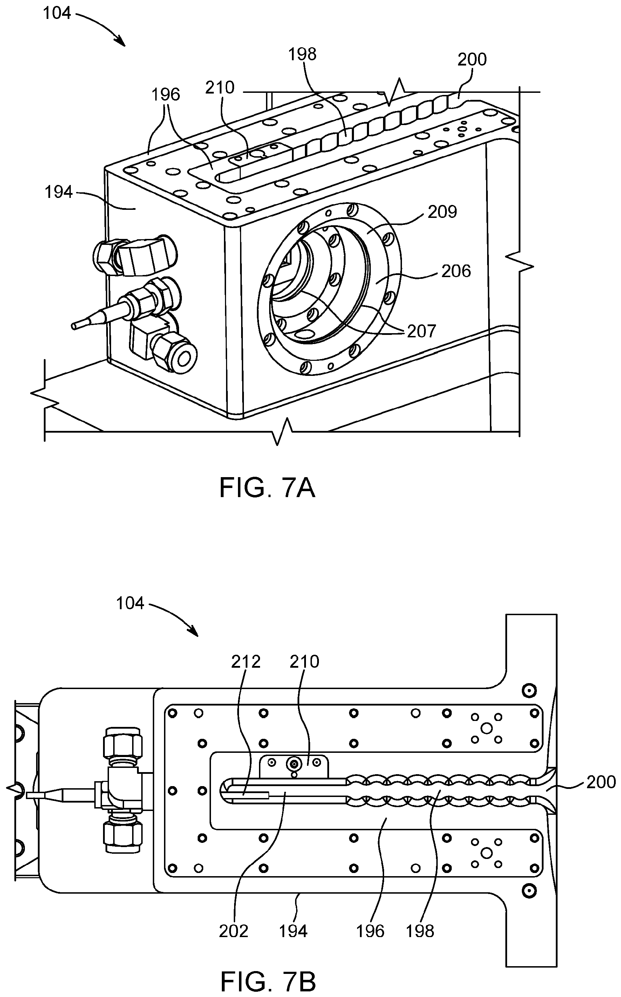

With reference to **FIGS. 7A-7C****,** the inspection station **104** is shown separately from the remaining components of the inspection apparatus **100** shown in **FIG. 1****.** The inspection station **104** is connected to the holding station **102** (shown in **FIG. 7C****)** to allow transfer of individual holders **144** from the holding chamber **114** to the inspection station **104.** The inspection station **104** includes a housing **194** having a sidewall **196** defining an inspection chamber **198.** The inspection chamber **198** is configured for being at least partially filled with liquid, such as water or a saline solution. In some examples or aspects, the inspection chamber **198** is in fluid communication with the holding chamber **114** (shown in **FIG. 7C****).**

With continued reference to **FIGS. 7A-7C****,** the inspection chamber **198** has a transfer channel **200** connecting an inspection portion **202** to the holding chamber **114.** The inspection chamber **198** has a width that is configured to accommodate the holder **144** held by the gripper mechanism **184** (shown in **FIG. 6****)** during transfer of the holder **144** between the holding chamber **114** and the inspection chamber **198.** In some examples or aspects, as shown in **FIG. 7C****,** an inner surface **204** of the sidewall **196** of the transfer channel **200** may be scalloped to help diffuse any stray light from the inspection portion from passing into the holding chamber **114.** The scalloped inner surface **204** of the sidewall **196** diffuses incident light to minimize the passage of light into the holding chamber **114.** Additionally, the scalloped inner surface **204** of the sidewall **196** is configured to maximize heat transfer to the liquid inside the inspection chamber **198** to help in maintaining an accurate liquid temperature.

With reference to **FIG. 7A****,** the inspection station **104** may have a viewing port **206** in the sidewall **196.** The viewing port **206** has a transparent cover to permit viewing of the inspection chamber **198** from the outside of the housing **194** through the viewing port **206.** The viewing port **206** is positioned at the inspection portion **202** such that the optical article **300** (shown in **FIG. 5B****)** can be inspected through the viewing port **206** when the holder **144** is positioned in the inspection portion **202** using an inspection device **208** (shown in **FIG. 1****).** In some examples or aspects, the viewing port **206** may have a pair of windows **207** having a cavity **209** therebetween that is configured for receiving heated liquid. In this manner, heat loss though the viewing port **206** is minimized in order to accurately control the temperature of the liquid inside the inspection chamber **198.** A removable shield **210** may be provided on the inner surface of the sidewall **196** to block at least a portion of the optical article **300** when the holder **144** in positioned at the inspection portion **194.** As shown in **FIG. 7B****,** a temperature probe **212** extends into the inspection chamber **198** and is configured for measuring a temperature of the liquid inside the inspection chamber **198.**

With reference to **FIG. 1****,** an auxiliary portion **214** is connected to the holding station **102** and is configured for receiving equipment for temperature control and circulation of liquid through the holding station **102** and the inspection station **104.** With reference to **FIG. 8****,** the auxiliary portion **214** is shown separately from the remaining components of the inspection apparatus **100** shown in **FIG. 1****.** The auxiliary portion **214** includes a housing **216** having a sidewall **218** defining an auxiliary chamber **220.** The auxiliary chamber **220** is configured for being at least partially filled with liquid **L,** such as water or a saline solution. In some examples or aspects, the auxiliary chamber **220** is in fluid communication with the holding chamber **114** and the inspection chamber **198.**

With continued reference to **FIG. 8****,** the auxiliary chamber **220** has a pump **222** configured for circulating the liquid within the holding chamber and within a temperature control circuit of the inspection apparatus, as described herein. The pump **222** is connected to a first outlet **224** that is configured for delivering the pumped liquid from the auxiliary chamber **220** into the holding chamber **114.** In some examples or aspects, the pump **222** is connected to a second outlet **226** that is configured for delivering the pumped liquid to a temperature control circuit **228** (shown in **FIGS. 2A** and **7C****).** In some examples or aspects, separate pumps **222** may be provided for delivering the liquid to the holding chamber **114** and the temperature control circuit **228** via the first and second outlets **224, 226,** respectively. The pump **222** has a filter **230** for filtering the liquid prior to the liquid being pumped out of the auxiliary chamber **220** via the first and second outlets **224, 226.** Overflow liquid from the holding chamber **114** is returned to the auxiliary chamber **220** via a first inlet **232,** and overflow liquid from the temperature control circuit **228** is returned to the auxiliary chamber **220** via a second inlet **234.** In some examples or aspects, a float sensor **235** and a top-off sensor **237** may be provided in the auxiliary chamber **220.** The float sensor **235** and the top-off sensor **237** are configured to maintain the desired amount of liquid in the inspection apparatus **100** and prevent overfilling of any of the chambers with liquid. This arrangement permits the inspection apparatus **100** to run throughout the duration preset by the user without the need to attend to the apparatus **100** to check on the liquid levels in various chambers.

With reference to **FIG. 2A****,** liquid pumped using the pump **220** via the first outlet **224** (shown in **FIG. 8****)** is delivered to a first portion **236** of the temperature control circuit **228.** In some examples or aspects, the first portion **236** of the temperature control circuit **228** may have one or more first flow channels **238** in a bottom plate **240** of the holding station **102** and the inspection station **104** (shown in **FIG. 1****).** The one or more first flow channels **238** are in fluid communication with the auxiliary chamber **220** via the first inlet **232** and the first outlet **224.** The bottom plate **240** connects to the bottom wall **112** of the holding chamber **114** and the bottom wall of the inspection station **104.** As the liquid is circulated through the one or more first flow channels **238,** heat is transferred from the liquid to the housing **108** of the holding chamber **114** and the housing **194** of the inspection chamber **198.** In this manner, liquid inside the holding chamber **114** and the inspection chamber **198** is indirectly heated through the sidewall **110** of the holding chamber **114** and the sidewall **196** of the inspection chamber **198.**

With reference to **FIG. 7C****,** second portion **242** of the temperature control circuit **228** is provided on the housing **194** of the inspection station **104.** In some examples or aspects, the second portion 242 of the temperature control circuit 228 may have one or more second flow channels 244 extending through the sidewall 196 of the inspection station 104. The one or more second flow channels 244 are in fluid communication with the auxiliary chamber 220 via the first inlet 232 and the first outlet 224. As the liquid is circulated through the one or more second flow channels 244, heat is transferred from the liquid to the housing 196 of the inspection chamber 198. In this manner, liquid inside the inspection chamber 198 is indirectly heated through the sidewall 196 of the inspection chamber 198.

With reference to FIG. 8, a temperature controller 246 is provided in the auxiliary chamber 220 and is configured for heating the liquid inside the auxiliary chamber 220 to a predetermined temperature. The temperature controller 246 is configured to increase the temperature of the liquid to a temperature at which an automated inspection process of the optical articles 300 can be carried out. For example, the temperature controller 246 may be configured to maintain the temperature of the liquid within +/- 0.1 °C of a desired temperature setpoint. In various examples or aspects, the temperature controller 246 may be at least one of a conductive heating device, a convective heating device, or a radiative heating device. In some examples or aspects, the temperature controller 246 may be configured to cool the liquid inside the auxiliary chamber 220. For example, the temperature controller 246 may be a thermo-electric heating/cooling device that is capable of heating or cooling the liquid inside the auxiliary chamber 220.

With reference to FIG. 1, the inspection apparatus 100 has at least one control device 250 operatively connected to at least one component of the holding station 102, the inspection station 106, and/or the transfer station 108. In some examples or aspects, a single control device 250 may be configured to control at least one component of the holding station 102, the inspection station 106, and/or the transfer station 108. In other examples or aspects, separate control devices 250 may be provided for each of the holding station 102, the inspection station 106, and the transfer station 108.

The at least one control device 250 may be configured to control at least one of operation of the drive mechanism 134 for rotating the holding platform 128, operation of the actuator 192 of the gripper mechanism 184, operation of the gripper actuator 192 for operating the jaws 190a, 190b, operation of the pump 222, and operation of the temperature controller 246. In some examples or aspects, the at least one control device **250** may be configured for operating on a 110V or a 220V AC power circuit, and/or on battery power. In other examples or aspects, the at least one control device **250** may be configured for operating on a 12V DC power circuit.

In some examples or aspects, the at least one control device **250** may be a microprocessor controller. The at least one control device **250** may be configured for pulse width modulated (PWM) operation, wherein analog operation of at least one of the drive mechanism **134,** the actuator **192** of the gripper mechanism **184,** gripper actuator **192** for operating the jaws **190a, 190b,** the inspection device **208,** the pump **222,** and the temperature controller **246** can be achieved using digital control signals. In some examples or aspects, the at least one control device **250** may be configured for continuously modulated control of at least one of the drive mechanism **134,** the actuator **192** of the gripper mechanism **184,** gripper actuator **192** for operating the jaws **190a, 190b,** the inspection device **208,** the pump **222,** and the heat exchanger **246.** The at least one control device **250** may have memory configured for storing one or more predetermined automated inspection processes, as discussed herein.

With continued reference to **FIG. 1****,** the inspection apparatus **100** has at least one user input device **252** configured for inputting user commands to control the operation of at least one of the drive mechanism **134,** the actuator **192** of the gripper mechanism **184,** gripper actuator **192** for operating the jaws **190a, 190b,** the inspection device **208,** the pump **222,** and the temperature controller **246.** The user input device **252** may include one or more devices capable of receiving information or input from the user. For example, the user input device **252** may include one or more buttons or switches **254.** Alternatively or additionally, the user input device **252** may include one or more computing devices having an electronic visual display capable of displaying a graphical user interface (GUI), such as one or more monitors, touchscreens, or the like. Further, the user input device **252** may include or be in communication with one or more input devices capable of receiving input such as a touch screen display, a keyboard, a keypad, a mouse, a button, a switch, and/or the like. In some examples or aspects, the user input device **252** may be a remote device that is configured for wireless or wired communication with the inspection apparatus **100.** For example, the user input device **252** may be a remote computer device or mobile phone having an application configured for wireless communication (e.g. Wi-Fi, Bluetooth, or the like) or wired communication (e.g. Ethernet cable) with the inspection apparatus **100.**

In examples where the user input device **154** includes an electronic visual display, such visual display can be configured for receiving user input for controlling the operation of at least one of the drive mechanism **134,** the actuator **192** of the gripper mechanism **184,** gripper actuator **192** for operating the jaws **190a, 190b,** the inspection device **208,** the pump **222,** and the temperature controller **246,** and for communicating status information about an operating status or condition of the operation of at least one of the drive mechanism **134,** the actuator **192** of the gripper mechanism **184,** gripper actuator **192** for operating the jaws **190a, 190b,** the inspection device **208,** the pump **222,** and the temperature controller **246.** For example, the user input device **252** may be an LCD touchscreen used to input commands to control operation of at least one of the drive mechanism **134,** the actuator **192** of the gripper mechanism **184,** gripper actuator **192** for operating the jaws **190a, 190b,** the inspection device **208,** the pump **222,** and the temperature controller **246.** Furthermore, the user input device **252** that is configured as an LCD touchscreen may provide information regarding the operating status or condition of at least one of the drive mechanism **134,** the actuator **192** of the gripper mechanism **184,** gripper actuator **192** for operating the jaws **190a, 190b,** the inspection device **208,** the pump **222,** and the temperature controller **246.**

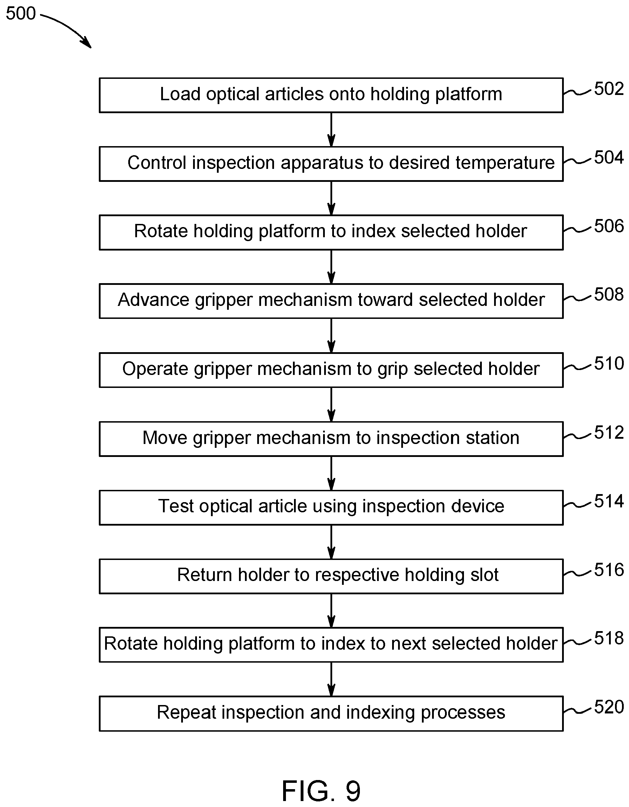

Having described the inspection apparatus **100** with reference to **FIGS. 1-8****,** an exemplary method **500** of using the inspection apparatus **100** to inspect a plurality of optical articles, such as the optical article **300** described herein, will now be described with reference to **FIG. 9****.** In some examples or aspects, the inspection apparatus **100** may be operated to perform one or more inspection processes on each of the plurality of optical articles **300.** In this manner, a plurality of optical articles can be inspected in a batch processes.

At step **502,** a plurality of optical articles **300,** such as one or more contact lenses, are loaded onto the holding platform **128** that is received within the holding chamber **114** of the holding station **102.** For example, each optical article **300** may be loaded into the holder **144,** and the holders **144** having the optical articles **300** are then loaded into respective holding slots **138** of the holding platform **128.** As described herein, the holders **144** may be magnetically connected to the respective holding slots **138** of the holding platform **128.**

After loading the optical articles **300** into the holding station **102,** at step **504** the liquid in the holding chamber **114** and the inspection chamber **198** is heated to a predetermined temperature and the temperature of the liquid is maintained using the temperature controller **246** and the pump **222.**

Once the predetermined temperature is reached, the automated inspection process for inspecting the plurality of optical articles **300** is started. Initially, at step **506,** the holding platform **128** is rotated via the drive mechanism **134** until a selected holder **144** is indexed to an inspection position. In some examples or aspects, the inspection position may be proximate to the inspection station to facilitate transfer of the holder **144** from the holding platform **128** to the inspection station **104.**

At step **508,** the gripper mechanism **184** is advanced toward the selected holder **144** such that gripper mechanism **184** is aligned with the selected holder **144.** At step **510,** the gripper mechanism **184** is operated to grip the selected holder **144.** For example, the jaws **190a, 190b** may be operated via actuation of the gripper actuator **192** to engage the second connection member **178** of the holder body **160.** The plurality of pins **191** on one of the jaws **190a, 190b** are extend through the through holes **180** on the second connection member **178** of the holder **144** to accurately position the holder **144** with respect to the gripper mechanism **184.**

At step **512,** the gripper mechanism is moved from the inspection position to the inspection station **104.** In some examples or aspects, movement of the gripper mechanism **184** away from the holding platform **128** disengages the magnetic connection between the holder **144** and the respective holding slot **138** on the holding platform **128.** The gripper mechanism **184** is configured to move the selected holder **144** from the holding slot **138** on the holding platform **128** to the inspection portion **202** within the inspection chamber **198.**

At step **514,** the holder **144** is positioned in the inspection station **104** such that the optical article **300** may be tested using the inspection device **208.** In some examples or aspects, the inspection device **208** is configured to test at least one optical characteristic of the optical article **300.**

After completion of the inspection process, the holder **144** is returned to its respective holding slot **138** at step **516.** For example, the gripper mechanism **184** is moved from the inspection station **104** toward the inspection position at the holding platform **128.** In some examples or aspects, as the gripper mechanism **184** is positioned proximate the holding slot **138** of the selected holder **144,** the magnetic connection between the holder **144** and the respective holding slot **138** on the holding platform **128** is established and the gripper mechanism **128** can release the holder **144.**

At step **518,** the holding platform **128** is indexed to the next selected holder **144** so that the gripper mechanism **184** can grip the next selected holder **144** and transfer it to the inspection station **104** for inspection. The indexing and inspection processes of steps **506-518** are repeated at step **520** until all optical articles **300** on the holding platform **128** have been inspected. The inspection process then terminates and the inspected optical articles **300** can be removed from the inspection apparatus **100.**

It will be readily appreciated by those skilled in the art that various modifications, as indicated above, may be made to the disclosure without departing from the concepts disclosed in the foregoing description.

## Claims

1. An inspection apparatus (100) configured for inspecting optical articles (300), the inspection apparatus comprising:
an inspection chamber (198) comprising an inspection station (104);
a holding chamber (114) having an indexable holding platform (128) with a plurality of holding slots each configured for receiving a holder (144) adapted for securing the optical article, the indexable holding platform configured to index a selected holder into an inspection position; and
a gripper mechanism (184) configured for transferring the selected holder from the inspection position to the inspection chamber.

2. The inspection apparatus according to claim 1, wherein each holder comprises:
a holder body (160) having a lens receiving portion,
a clamping lid (164) connected to the holder body and movable between a closed position configured for clamping the optical article and an open position; and
a first connection member (154) configured for securing the holder body to the holding slot of the indexable holding platform.

3. The inspection apparatus according to claim 1 or 2, wherein the first connection member (154) is one of a first magnet and a first magnetically attractable material that is configured for magnetically interacting with a corresponding one of a second magnetically attractable material and a second magnet on the holding slot of the indexable holding platform.

4. The inspection apparatus according to claim 3, wherein each holder comprises a second connection member (178) configured for connecting the holder body to the gripper mechanism.

5. The inspection apparatus according to any of claims 1-4, wherein each holder further comprises an identification tag (184).

6. The inspection apparatus according to any of claims 1-5, wherein the indexable holding platform (128) is a rotary magazine comprising a plurality of distinct circumferential positions each having a holding slot.

7. The inspection apparatus according to any of claims 1-6, wherein each holding slot of the holding mechanism comprises a baffle positioned relative to the holder such that the baffle covers the optical article (300).

8. The inspection apparatus according to any of claims 1-7, wherein the gripper mechanism (184) is linearly movable between a first position corresponding to a location of the inspection position of the indexable holding platform and a second position corresponding to a location of the inspection station.

9. The inspection apparatus according to any of claims 1-8, wherein the inspection station (104) comprises at least one viewing port and wherein the inspection chamber has a scalloped sidewall.

10. The inspection apparatus according to any of claims 1-9, further comprising an auxiliary chamber having:
a pump configured for circulating fluid within the holding chamber and within a temperature control circuit of the inspection apparatus;
a filter configured for filtering the fluid; and
a temperature controller configured for controlling a temperature of the fluid.

11. The inspection apparatus according to any of claims 1-10, wherein the holding chamber (114) is in fluid communication with the inspection chamber.

12. The inspection apparatus according to any of claims 1-11, wherein the holding chamber (114) is optically isolated from the inspection chamber.

13. A method of inspecting an optical article using an inspection apparatus, the method comprising:
rotating an indexable holding platform (128) comprising a plurality of holding slots each configured for receiving a holder adapter for securing the optical article until a selected holder is indexed to an inspection position;
moving a gripping mechanism (184) to the inspection position to grip the selected holder; and
moving the gripping mechanism from the inspection position to an inspection station configured for inspecting the optical article (300).

14. The method according to claim 13, further comprising returning the selected holder to the indexable holding platform (128) after inspecting the optical article and rotating the indexable holding platform until a next selected holder is indexed to the inspection position.

15. The method according to claim 13 or 14, further comprising maintaining a temperature of a fluid immersing the holders at a predetermined temperature.

## Patentansprüche

1. Inspektionsvorrichtung (100), die zum Inspizieren optischer Gegenstände (300) ausgelegt ist, wobei die Inspektionsvorrichtung Folgendes umfasst:
eine Inspektionskammer (198), die eine Inspektionsstation (104) umfasst;
eine Haltekammer (114) mit einer indexierbaren Halteplattform (128) mit einer Vielzahl von Haltenuten, die jeweils dazu ausgelegt sind, einen Halter (144) aufzunehmen, der zum Fixieren des optischen Gegenstands angepasst ist, wobei die indexierbare Halteplattform dazu ausgelegt ist, einen ausgewählten Halter in eine Inspektionsposition zu indexieren; und
einen Greifermechanismus (184), der zum Überführen des ausgewählten Halters von der Inspektionsposition zur Inspektionskammer ausgelegt ist.

2. Inspektionsvorrichtung nach Anspruch 1, wobei jeder Halter Folgendes umfasst:
einen Halterkörper (160) mit einem Linsenaufnahmeabschnitt,
einen Klemmdeckel (164), der mit dem Halterkörper verbunden ist und zwischen einer geschlossenen Position, die zum Klemmen des optischen Gegenstands ausgelegt ist, und einer offenen Position beweglich ist; und
ein erstes Verbindungselement (154), das zum Befestigen des Halterkörpers am Halteschlitz der indexierbaren Halteplattform ausgelegt ist.

3. Inspektionsvorrichtung nach Anspruch 1 oder 2, wobei das erste Verbindungselement (154) ein erster Magnet oder ein erstes magnetisch anziehbares Material ist, das dazu ausgelegt ist, magnetisch mit einem entsprechenden eines zweiten magnetisch anziehbaren Materials und eines zweiten Magneten am Halteschlitz der indexierbaren Halteplattform zu interagieren.

4. Inspektionsvorrichtung nach Anspruch 3, wobei jeder Halter ein zweites Verbindungselement (178) umfasst, das zum Verbinden des Halterkörpers mit dem Greifermechanismus ausgelegt ist.

5. Inspektionsvorrichtung nach einem der Ansprüche 1-4, wobei jeder Halter ferner ein Identifikationsetikett (184) umfasst.

6. Inspektionsvorrichtung nach einem der Ansprüche 1-5, wobei die indexierbare Halteplattform (128) ein Drehmagazin ist, das eine Vielzahl von unterschiedlichen Umfangspositionen umfasst, die jeweils einen Halteschlitz aufweisen.

7. Inspektionsvorrichtung nach einem der Ansprüche 1-6, wobei jeder Halteschlitz des Haltemechanismus ein Abdeckelement umfasst, das relativ zum Halter so positioniert ist, dass das Abdeckelement den optischen Gegenstand (300) bedeckt.

8. Inspektionsvorrichtung nach einem der Ansprüche 1-7, wobei der Greifermechanismus (184) linear zwischen einer ersten Position, die einem Ort der Inspektionsposition der indexierbaren Halteplattform entspricht, und einer zweiten Position, die einem Ort der Inspektionsstation entspricht, beweglich ist.

9. Inspektionsvorrichtung nach einem der Ansprüche 1-8, wobei die Inspektionsstation (104) mindestens eine Sichtöffnung umfasst und wobei die Inspektionskammer eine gewellte Seitenwand aufweist.

10. Inspektionsvorrichtung nach einem der Ansprüche 1-9, ferner umfassend eine Hilfskammer, die Folgendes aufweist:
eine Pumpe, die zum Zirkulieren von Fluid innerhalb der Haltekammer und innerhalb eines Temperaturregelkreises der Inspektionsvorrichtung ausgelegt ist;
einen Filter, der zum Filtern des Fluids ausgelegt ist; und
einen Temperaturregler, der zum Regeln einer Temperatur des Fluids ausgelegt ist.

11. Inspektionsvorrichtung nach einem der Ansprüche 1-10, wobei die Haltekammer (114) in Fluidverbindung mit der Inspektionskammer steht.

12. Inspektionsvorrichtung nach einem der Ansprüche 1-11, wobei die Haltekammer (114) optisch von der Inspektionskammer isoliert ist.

13. Verfahren zum Inspizieren eines optischen Gegenstands unter Verwendung einer Inspektionsvorrichtung, wobei das Verfahren Folgendes umfasst:
Drehen einer indexierbaren Halteplattform (128), die eine Vielzahl von Halteschlitzen umfasst, die jeweils zum Aufnehmen eines Halteradapters zum Befestigen des optischen Gegenstands ausgelegt sind, bis ein ausgewählter Halter in eine Inspektionsposition indexiert wird;
Bewegen eines Greifmechanismus (184) in die Inspektionsposition, um den ausgewählten Halter zu greifen; und
Bewegen des Greifmechanismus von der Inspektionsposition zu einer Inspektionsstation, die zum Inspizieren des optischen Gegenstands (300) ausgelegt ist.

14. Verfahren nach Anspruch 13, ferner umfassend das Zurückführen des ausgewählten Halters zur indexierbaren Halteplattform (128) nach dem Inspizieren des optischen Gegenstands und Drehen der indexierbaren Halteplattform, bis ein nächster ausgewählter Halter in die Inspektionsposition indexiert wird.

15. Verfahren nach Anspruch 13 oder 14, ferner umfassend das Aufrechterhalten der Temperatur eines die Halter umgebenden Fluids auf einer vorbestimmten Temperatur.

## Revendications

1. Appareil d'inspection (100) conçu pour inspecter des articles d'optique (300), l'appareil d'inspection comprenant :
une chambre d'inspection (198) comprenant une station d'inspection (104) ;
une chambre de retenue (114) comportant une plateforme de retenue indexable (128) avec une pluralité de fentes de retenue conçues chacune pour recevoir un élément de retenue (144) conçu pour fixer l'article optique, la plateforme de retenue indexable étant conçue pour indexer un élément de retenue sélectionné dans une position d'inspection ; et
un mécanisme de préhension (184) conçu pour transférer l'élément de retenue sélectionné de la position d'inspection à la chambre d'inspection.

2. Appareil d'inspection selon la revendication 1, chaque élément de retenue comprenant :
un corps d'élément de retenue (160) présentant une partie de réception de lentille,
un couvercle de serrage (164) relié au corps d'élément de retenue et mobile entre une position fermée conçue pour serrer l'article d'optique et une position ouverte ; et
un premier élément de liaison (154) conçu pour fixer le corps d'élément de retenue à la fente de retenue de la plateforme de retenue indexable.

3. Appareil d'inspection selon la revendication 1 ou 2, le premier élément de liaison (154) étant l'un d'un premier aimant et d'un premier matériau magnétiquement attirable qui est conçu pour interagir magnétiquement avec l'un correspondant parmi un second matériau magnétiquement attirable et un second aimant sur la fente de retenue de la plateforme de retenue indexable.

4. Appareil d'inspection selon la revendication 3, chaque élément de retenue comprenant un second élément de liaison (178) conçu pour relier le corps d'élément de retenue au mécanisme de préhension.

5. Appareil d'inspection selon l'une quelconque des revendications 1 à 4, chaque élément de retenue comprenant en outre une étiquette d'identification (184).

6. Appareil d'inspection selon l'une quelconque des revendications 1 à 5, la plateforme de retenue indexable (128) étant un magasin rotatif comprenant une pluralité de positions circonférentielles distinctes comportant chacune une fente de retenue.

7. Appareil d'inspection selon l'une quelconque des revendications 1 à 6, chaque fente de retenue du mécanisme de retenue comprenant un déflecteur positionné par rapport à l'élément de retenue de sorte que le déflecteur recouvre l'article optique (300).

8. Appareil d'inspection selon l'une quelconque des revendications 1 à 7, le mécanisme de préhension (184) étant mobile linéairement entre une première position correspondant à un emplacement de la position d'inspection de la plateforme de retenue indexable et une seconde position correspondant à un emplacement de la station d'inspection.

9. Appareil d'inspection selon l'une quelconque des revendications 1 à 8, la station d'inspection (104) comprenant au moins un orifice d'observation et la chambre d'inspection présentant une paroi latérale festonnée.

10. Appareil d'inspection selon l'une quelconque des revendications 1 à 9, comprenant en outre une chambre auxiliaire comportant :
une pompe conçue pour faire circuler du fluide à l'intérieur de la chambre de retenue et à l'intérieur d'un circuit de régulation de température de l'appareil d'inspection ;
un filtre conçu pour filtrer le fluide ; et
un régulateur de température conçu pour réguler une température du fluide.

11. Appareil d'inspection selon l'une quelconque des revendications 1 à 10, la chambre de retenue (114) étant en communication fluidique avec la chambre d'inspection.

12. Appareil d'inspection selon l'une quelconque des revendications 1 à 11, la chambre de retenue (114) étant optiquement isolée de la chambre d'inspection.

13. Procédé d'inspection d'un article d'optique au moyen d'un appareil d'inspection, le procédé comprenant les étapes consistant à :
faire tourner une plateforme de retenue indexable (128) comprenant une pluralité de fentes de retenue conçues chacune pour recevoir un adaptateur d'élément de retenue pour fixer l'article d'optique jusqu'à ce qu'un élément de retenue sélectionné soit indexé dans une position d'inspection ;
déplacer un mécanisme de préhension (184) vers la position d'inspection pour saisir l'élément de retenue sélectionné ; et
déplacer le mécanisme de préhension de la position d'inspection à une station d'inspection conçue pour inspecter l'article optique (300).

14. Procédé selon la revendication 13, comprenant en outre les étapes consistant à ramener l'élément de retenue sélectionné vers la plateforme de retenue indexable (128) après inspection de l'article optique et à faire tourner la plateforme de retenue indexable jusqu'à ce qu'un élément de retenue sélectionné suivant soit indexé sur la position d'inspection.

15. Procédé selon la revendication 13 ou 14, comprenant en outre l'étape consistant à maintenir une température d'un fluide immergeant les éléments de retenue à une température prédéfinie.
